# EUROPÄISCHE PATENTSCHRIFT

(11) **EP 0 613 567 B1**
(45) Veröffentlichungstag und Bekanntmachung des Hinweises auf die Patenterteilung: **12.07.2000**
(21) Anmeldenummer: 93919001.3
(22) Anmeldetag: 15.09.1993
(51) Int. Cl.: G02B 21/06

(54) **AUFLICHTBELEUCHTUNGSSYSTEM FÜR MIKROSKOPE**
DIRECT-LIGHT ILLUMINATION SYSTEM FOR MICROSCOPES
SYSTEME D'ECLAIRAGE INCIDENT POUR MICROSCOPES

(30) Priorität: 18.09.1992 DE 4231267
(43) Veröffentlichungstag der Anmeldung: 07.09.1994
(73) Patentinhaber: Leica Microsystems Wetzlar GmbH, 35578 Wetzlar (DE)
(72) Erfinder: STANKEWITZ, Hans-Werner, D-35579 Wetzlar (DE)
(74) Vertreter: Reichert, Werner F., Dr.
(86) Internationale Anmeldenummer: DE9300865
(87) Internationale Veröffentlichungsnummer: WO9407168

(56) Entgegenhaltungen:
- DE-A- 4 231 267
- DE-B- 2 021 654
- GB-A- 2 232 270
- US-A- 3 277 782
- PATENT ABSTRACTS OF JAPAN vol. 8, no. 286 (P-324)(1723) 27. Dezember 1984 & JP,A,59 151 126 (MITSUTOYO SEISAKUSHO K.K.) 29. August 1984
- H. RIESENBERG: "Handbuch der Mikroskopie" VEB VERLAG TECHNIK, BERLIN
- DR. M. BEREK: "Grundlagen der praktischen Optik", WALTER DE GRUYTER & CO., 1970

## Beschreibung

Die Erfindung betrifft ein Auflichtbeleuchtungssystem für Mikroskope.

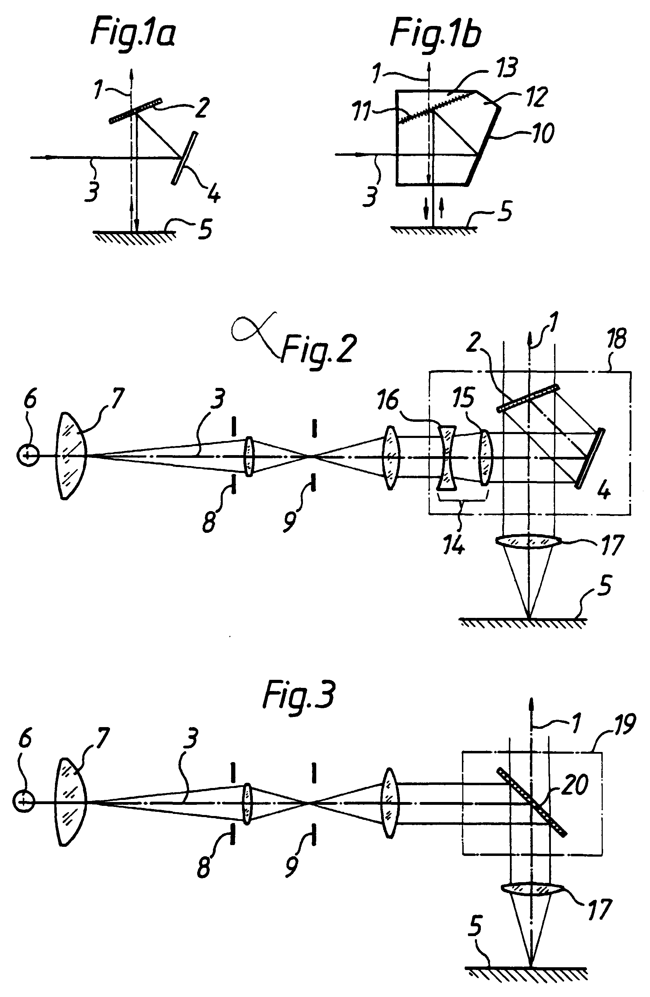

Aus H. Riesenberg: "Handbuch der Mikroskopie", 3.Aufl., VEB Verlag Technik Berlin, 1988, Seite 303, ist eine Auflichtpolarisationseinrichtung für Mikroskope bekannt, bei der ein teildurchlässiges Planglas mit einem totalreflektierenden Spiegel kombiniert wird. Diese Spiegel-Kombination wird auch "Smith-Teiler" genannt, vgl. insoweit auch die Figuren der DE-AS 1 422 449, die ein Mikroskop mit Auflichtbeleuchtung betrifft und in der als Erfinder F.H.Smith benannt wurde. Dieser nach ihm benannte Teiler wird in Fig. 1a näher erläutert. In einer vertikal verlaufenden optischen Achse 1 des Mikroskops ist eine teildurchlässige Planfläche 2 derart positioniert, daß sie ein horizontal auf einen Reflexionsspiegel 4 auftreffendes und von dort zu ihr hin reflektiertes Beleuchtungsstrahlenbündel 3 koaxial zur optischen Achse 1 in Richtung zum Objekt 5 umlenkt. Der vom Objekt 5 reflektierte Lichtanteil gelangt nach Durchtritt durch die Planfläche 2 sodann in die Richtung eines nicht mit dargestellten Mikroskop-Okulars. Bei dem bekannten "Smith-Teiler" ist zwischen der nicht mit dargestellten Lichtquelle und dem Reflexionsspiegel 4 außerdem noch eine Polarisationsplatte angeordnet, die zweckmäßigerweise so orientiert ist, daß der polarisierte Lichtstrahl, welcher auf die teildurchlässige Planfläche 2 fällt, mit seiner Polarisationsebene senkrecht oder parallel zu der Ebene des Einfalls steht.

Aus der GB 2 232 270 A ist darüber hinaus ein Mikroskop-Beleuchtungssystem bekannt, das eine "telezentrische" Linse enthält, die vorzugsweise senkrecht zur optischen Achse des Systems verschiebbar ist. Nachteilig bei dieser bekannten Anordnung ist, daß die Aperturblenden-Ebene nicht beeinflußt wird. Dadurch wird eine zusätzliche Korrektur durch Abstandsänderung zwischen der Lichtquelle und der Kollektorlinse erforderlich. Damit ist aber kein schnelles Umschalten zwischen verschiedenen Beleuchtungsvarianten möglich.

Bei der Erstellung eines multifunktionellen Auflichtbeleuchtungs-Konzepts ist es wünschenswert, wenn unterschiedliche Teilersysteme in Abhängigkeit von der gerade gewählten Auflichtbeleuchtungs-Variante, beispielsweise Auflichtfluoreszenz, Hellfeld, Dunkelfeld, Polarisation, nebeneinander bzw. in schneller Wechselfolge genutzt werden können. Will man beispielsweise zwischen einer klassischen "Smith-Teiler"-Anordnung und einer bekannten Hellfeld-Auflichtanordnung mit einem 45°-Neutralteiler wechseln, so ergeben sich - konstruktionsbedingt - beträchtliche Längenunterschiede in den Strahlwegen. Ein derartiger Längenunterschied führt dazu, daß die Aperturblende falsch in die Pupille abgebildet wird, was zu unerwünschten Einbußen in der Abbildungsqualität führt.

Es ist daher die Aufgabe der vorliegenden Erfindung, ein Auflichtbeleuchtungssystem für Mikroskope anzugeben, mit dem unterschiedliche Auflichtbeleuchtungs-Varianten in schneller Folge nach Wahl ausgewählt werden können, wobei gleichzeitig eine korrekte Abbildung der Aperturblende in die Austrittspupille des Objektivs realisiert wird.

Die Aufgabe wird erfindungsgemäß bei einem einen "Smith-Teiler" aufweisenden Auflichtbeleuchtungssystem durch die Merkmale des kennzeichnenden Teils des Anspruchs 1 und - alternativ - durch die kennzeichnenden Merkmale des Anspruchs 2 gelöst. Weitere vorteilhafte Ausgestaltungen ergeben sich aus den Unteransprüchen.

Die Erfindung wird nunmehr anhand der Figuren näher erläutert. Es zeigen in rein schematischer Darstellung:
- Fig. 1a:: den an sich bekannten "Smith-Teiler"
- Fig. 1b:: eine modifizierte "Smith-Teiler"-Anordnung;
- Fig. 2 :: einen mikroskopischen Auflicht-Strahlengang mit erfindungsgemäßem Auflichtbeleuchtungs-Modul;
- Fig. 3 :: einen Auflicht-Hellfeldstrahlengang mit einem modular konzipierten 45°-Neutralteiler.

Die Erfindung wird nachfolgend anhand der Fig. 2 und 3 erläutert. Beide Figuren unterscheiden sich prinzipiell lediglich im Bereich der Module 18 (Fig. 2) bzw. 19 (Fig. 3). Das Beleuchtungsstrahlenbündel 3 geht von einer Lichtquelle 6 aus, durchläuft zunächst einen Kollektor 7, sodann eine Aperturblende 8 und trifft von dort aus nach Durchtritt durch eine nicht näher gekennzeichnete Linse durch die Leuchtfeldblende 9, danach wiederum durch eine Linse und trifft anschließend auf ein in einem Auflichtbeleuchtungs-Modul 18 angeordnetes Telesystem 14, das aus einem zunächst passierten Zerstreuungsglied 16 und einem nachgeordneten Sammelglied 15 zusammengesetzt ist. Es ist natürlich auch möglich, daß das Telesystem aus einem Kittglied (kombinierte Sammel- und Zerstreuungslinse) bzw. lediglich aus einem dicken Meniskus mit einer sammelnden und einer zerstreuenden Fläche besteht. Das horizontale Beleuchtungsstrahlenbündel 3 trifft dann auf den zum "Smith-Teiler" gehörenden Reflexionsspiegel 4, an dem es vollständig reflektiert und zur teildurchlässigen Planfläche 2 hingelenkt wird, die im Bereich der vertikal verlaufenden optischen Achse 1 des Mikroskops unter einem Winkel ≠ 45° angeordnet ist. Der an der Teilerfläche 2 reflektierte Beleuchtungsstrahlenbündel-Anteil verläuft entlang der optischen Achse 1 und trifft nach Verlassen des Auflichtbeleuchtungs-Moduls 18 auf das Objektiv 17 des Mikroskops und von dort auf das auszuleuchtende und abzubildende Objekt 5. Das Abbildungsstrahlenbündel verläuft in Richtung der optischen Achse 1, tritt wiederum durch das Objektiv 17 und sodann in den Auflichtbeleuchtungs-Modul 18 ein und durchsetzt danach die teildurchlässige Planfläche 2 und gelangt schließlich von dort aus zum nicht mit dargestellten Okularsystem des Mikroskopes.

Wenn in einem multifunktionell ausgelegten Auflichtbeleuchtungssystem für Mikroskope gerade die in Fig. 3 dargestellte Variante, nämlich Hellfeld-Auflichtbeleuchtung mittels eines 45°-Neutralteilers 20, eingestellt ist und von dieser zu einer in Fig. 2 dargestellten Auflichtbeleuchtungs-Variante unter Verwendung eines "Smith-Teilers" gewechselt werden soll, gäbe es - wie weiter oben bereits ausgeführt - einen baubedingten Längenunterschied im Beleuchtungsstrahlengang. Daher wurde das Telesystem 14 in den Auflichtbeleuchtungs-Modul 18 integriert mit der Folge, daß der erwähnte Längenunterschied vollständig kompensiert bzw. korrigiert ist. Die Auflichtbeleuchtungs-Module 18 bzw. 19 können auf einem nicht mit dargestellten Modulträger austauschbar gehaltert sein. Dabei kann dieser Modulträger entweder als linearer Schieber oder als Revolver ausgebildet sein. Mit Hilfe dieses modularen Konzeptes ist eine schnelle Umschaltung beider Strahlenteiler-Arten realisierbar.

Die vorliegende Erfindung ist aber prinzipiell auch für die nachfolgend erläuterte umgekehrte Fall-Gestaltung anwendbar. Existiert beispielsweise eine Auflichtbeleuchtungs-Anordnung mit (isoliertem) "Smith-Teiler", der beispielsweise ebenfalls - ohne weitere optische Bauteile - in einem Modul gehaltert sein kann, und will man diesen "Smith-Teiler" gegen einen herkömmlichen 45°-Neutralteiler-Modul austauschen, dann ist in Ausübung der Lehre der vorliegenden Erfindung diesem 45°-Neutralteiler 20 ein Telesystem derart beizuordnen, daß dessen Zerstreuungsglied 16 unmittelbar zur Teilerfläche hin gerichtet und dessen Sammelglied 15 in Richtung zur Lichtquelle weist. Das Telesystem in der zuletzt dargestellten Orientierungsanordnung kann dabei beispielsweise als Unter-Modul konzipiert sein.

Durch die erfindungsgemäße Integration eines Telesystems in ein Auflichtbeleuchtungssystem für Mikroskope ist es daher möglich, in Abhängigkeit von den jeweils gewählten Auflichtbeleuchtungs-Varianten in der Weise korrigierend einzugreifen, daß mit Hilfe dieser "Verlagerungs-Optik" die Aperturblende in jedem Falle korrekt in die Pupille des Objektivs abgebildet wird. Durch die modulare Bauweise ist eine schnelle Realisierung aller in der Auflicht-Mikroskopie üblichen Beleuchtungs-Varianten möglich.

### Bezugsziffern-Liste

- 1: optische Achse des Mikroskops
- 2: teildurchlässige Planfläche
- 3: Beleuchtungsstrahlenbündel
- 4: Reflexionsspiegel
- 5: Objekt
- 6: Lichtquelle
- 7: Kollektor
- 8: Aperturblende
- 9: Leuchtfeldblende
- 10: vollverspiegelte Fläche
- 11: teildurchlässige Fläche
- 12: Pentaprisma
- 13: Rechtwinkelprisma
- 14: Telesystem
- 15: Sammelglied
- 16: Zerstreuungsglied
- 17: Objektiv
- 18: Auflichtbeleuchtungs-Modul
- 19: Modul für (20)
- 20: 45°-Neutralteiler

## Patentansprüche

1. Köhler'sches Auflichtbeleuchtungssystem für Mikroskope mit ortsfester Apertur- und Leuchtfeldblende,
**gekennzeichnet** durch einen Modul-Träger der
(a) einen ersten Auflicht-Beleuchtungsmodul (18) enthält, welcher aus einem eine Spiegel-Kombination aus einer teildurchlässigen Planfläche (2) und einem totalreflektierenden Spiegel (4) aufweisenden Smith-Teiler mit integriertem Telesystem (14) besteht, wobei die Planfläche (2) ein horizontal auf den Spiegel (4) auftreffendes und von dort zu ihr hin reflektierendes Beleuchtungsstrahlenbündel (3) koaxial zur vertikal verlaufenden optischen Achse (1) des Mikroskops in Richtung zum Objekt (5) umlenkt, wobei die Planfläche (2) des Smith-Teilers in der optischen Achse (1) unter einem Winkel ≠ 45° angeordnet ist, und das Telesystem, das aus einem Zerstreuungsglied (16) und einem nachgeordneten Sammelglied (15) zusammengesetzt ist, die Bedingungen für eine Köhler-Beleuchtung wiederherstellt, die durch die Einfügung des Smith-Teilers gestört waren, und im Beleuchtungsstrahlenbündel (3) vor dem Smith-Teiler derart angeordnet ist, daß dessen Sammellinse (15) unmittelbar zum Smith-Teiler hin gerichtet ist und das Zerstreuungsglied (16) in Richtung zur Lichtquelle (6) weist, und
(b) einen zweiten Auflicht-Beleuchtungsmodul (19) enthält, der aus einer unter 45° zur optischen Achse (1) stehenden Neutralteiler-Planfläche (20) besteht und mittels Betätigung des Modul-Trägers in Wirkstellung bringbar ist.

2. Köhler'sches Auflichtbeleuchtungssystem für Mikroskope mit ortsfester Apertur- und Leuchtfeldblende,
**gekennzeichnet** durch einen Modul-Träger der
(a) einen ersten Auflichtbeleuchtungs-Modul aufweist, der einen Smith-Teiler enthält, welcher aus einer Spiegel-Kombination aus einer teildurchlässigen Planfläche (2) und einem totalreflektierenden Spiegel (4) besteht, wobei die Planfläche (2) des SmithTeilers in der optischen Achse (1) des Mikroskops unter einem Winkel 45° angeordnet ist und ein horizontal auf den Spiegel (4) auftreffendes und von dort zu ihr hin reflektierendes Beleuchtungsstrahlenbündel (3) koaxial zur vertikal verlaufenden optischen Achse (1) in Richtung zum Objekt (5) umlenkt, und
(b) einen zweiten Auflichtbeleuchtungs-Modul (19) aufweist, der aus einer unter 45°zur optischen Achse (1) stehenden Neutralteiler-Planfläche (20) mit integriertem Telesystem besteht, wobei das Telesystem, das aus einem Sammelglied (15) und einem nachgeordneten Zerstreuungsglied (16) zusammengesetzt ist, die Bedingungen für eine Köhler-Beleuchtung wiederherstellt, die durch die Einfügung des Smith-Teilers gestört waren, und im Beleuchtungsstrahlenbündel (3) vor der Teilerfläche (20) derart angeordnet ist, daß dessen Zerstreuungsglied (16) unmittelbar zur Teilerfläche (20) hin gerichtet und das Sammelglied (15) in Richtung zur Lichtquelle (6) weist.

3. Auflichtbeleuchtungssystem nach einem der Ansprüche 1 und 2,
**dadurch gekennzeichnet**, daß beide Module (18, 19) auf einem Modul-Träger austauschbar gehaltert und mittels dieses Trägers in Wirkstellung bringbar sind.

4. Auflichtbeleuchtungssystem nach einem der Ansprüche 1 und 3,
**dadurch gekennzeichnet**, daß der Träger als linienförmiger Schieber ausgebildet ist.

5. Auflichtbeleuchtungssystem nach einem der Ansprüche 1 und 3,
**dadurch gekennzeichnet**, daß der Träger als Revolver ausgebildet ist.

6. Auflichtbeleuchtungssystem nach einem der vorhergehenden
Ansprüche, **dadurch gekennzeichnet**, daß Mittel zum Verkippen des Reflexionsspiegels (4) des Smith-Teilers vorgesehen sind.

7. Auflichtbeleuchtungssystem nach mindestens einem der Ansprüche 1 bis 6, **dadurch gekennzeichnet** , daß anstelle des aus Reflexionsspiegel (4) und teildurchlässiger Planfläche (2) bestehenden Smith-Teilers ein Pentaprisma (12) mit aufgekittetem Rechtwinkelprisma (13) vorgesehen ist, wobei die Kittfläche als teildurchlässige Fläche (11) ausgebildet ist.

8. Auflichtbeleuchtungssystem nach Anspruch 1 und 7, **dadurch gekennzeichnet**, daß die Sammellinse (15) mit dem Pentaprisma (12) in monolithischer Bauweise verbunden ist.

9. Auflichtbeleuchtungssystem nach mindestens einem der vorhergehenden Ansprüche, **dadurch gekennzeichnet**, daß das Telesystem aus einem Linsen-Kittglied besteht, welches aus einer Sammel- und einer Zerstreuungslinse zusammengesetzt ist.

10. Auflichtbeleuchtungssystem nach mindestens einem der vorhergehenden Ansprüche, **dadurch gekennzeichnet**, daß das Telesystem aus einem einstückigen Meniskus besteht, der eine sammelnde und eine zerstreuende Linsenfläche aufweist.

## Claims

1. Incident light illumination system of the Köhler type for microscopes with fixed aperture light stop and illuminated field light stop, characterised by a module carrier which
a) contains a first incident light illumination module (18), which consists of a Smith divider, which comprises a mirror combination of a partially translucent planar surface (2) and a totally reflecting mirror (4), with integrated telesystem (14), wherein the planar surface (2) deflects an illumination ray beam (3), which impinges horizontally onto the mirror (4) and is reflected from there towards it, in the direction towards the object (5) co-axially to the vertically extending optical axis (1) of the microscope, wherein the planar surface (2) of the Smith divider is arranged at an angle of 45° in the optical axis (1) and the telesystem, which is composed of a divergent member (16) and a collecting member (15) arranged therebehind, restores the conditions for an illumination of the Köhler type, which were disturbed by the insertion of the Smith divider, and is arranged in such a manner before the Smith divider in the illumination ray beam (3) that its collecting lens (15) is directed directly towards the Smith divider and the divergent member (16) faces in the direction towards the light source (6) and
b) contains a second incident light module (19), which consists of a neutral divider planar surface (20) at 45° to the optical axis (1) and is bringable into operative setting by means of actuation of the module carrier.

2. Incident light illumination system of the Köhler type for microscopes with fixed aperture light stop and illuminated field light stop, characterised by a module carrier which
a) comprises a first incident light illumination module which contains a Smith divider which consists of a mirror combination of a partially translucent planar surface (2) and a totally reflecting mirror (4), wherein the planar surface (2) of the Smith divider is arranged at an angle of 45° in the optical axis (1) and deflects an illumination ray beam (3), which impinges horizontally onto the mirror (4) and is reflected from there towards it, in the direction towards the object (5) co-axially to the vertically extending optical axis (1), and
b) comprises a second incident light module (19), which consists of a neutral divider planar surface (20) at 45° to the optical axis (1) with integrated telesystem, wherein the telesystem, which is composed of a collecting member (15) and a divergent member (16) arranged therebehind, restores the conditions for an illumination of the Köhler type, which were disturbed by the insertion of the Smith divider, and is arranged in the illumination ray beam (3) in such a manner before the divider surface (20) that the divergent member (16) thereof is directed directly towards the divider surface (20) and the collecting member (15) faces in the direction towards the light source (6).

3. Incident light illumination system according to one of the claims 1 and 2, characterised in that both modules (18, 19) are retained on a module carrier to be exchangeable and bringable into operative setting by means of this carrier.

4. Incident light illumination system according to one of the claims 1 and 3, characterised in that the carrier is constructed as linear slide.

5. Incident light illumination system according to one of the claims 1 and 3, characterised in that the carrier is constructed as rotary turret.

6. Incident light illumination system according to one of the preceding claims, characterised in that means for tilting the reflecting mirror (4) of the Smith divider are provided.

7. Incident light illumination system according to at least one of claims 1 to 6, characterised in that a pentaprism (12) with cemented-on right-angled prism (13) is provided in place of the Smith divider consisting of the reflecting mirror (4) and the partially translucent planar surface, wherein the cemented surface is formed as a partially translucent surface (11).

8. Incident light illumination system according to claim 1 and 7, characterised in that the collecting lens (15) is connected with the pentaprism (12) in monolithic mode of construction.

9. Incident light illumination system according to at least one of the preceding claims, characterised in that the telesystem consists of a cemented lens member which is composed of a collecting lens and a divergent lens.

10. Incident light illumination system according to at least one of the preceding claims, characterised in that the telesystem consists of a one-piece meniscus which has a collecting lens surface and a divergent lens surface.

## Revendications

1. Système d'éclairage incident de Köhler pour des microscopes avec diaphragmes d'ouverture et à fond clair stationnaire caractérisé par un support de modules qui,
(a) contient un premier module d'éclairage incident (18), qui se compose d'une combinaison de miroir formée d'un diviseur d'une surface plane partiellement transparente (2) un miroir totalement réfléchissant (4) avec télésystème intégré (14), en ce que la surface plane (2) dévie un faisceau des rayons d'éclairage (3) faisant impact horizontalement sur le miroir (4) et de là réfléchi vers elle, coaxialement à l'axe optique vertical (1) du microscope dans la direction de l'objet (5), en ce que la surface plane (2) du diviseur de Smith est agencée dans l'axe optique (1) à un angle ≠ 45° et le télésystème, qui se compose d'un organe de dispersion (16) et d'un organe collecteur (15) qui le suit, reproduit les conditions pour un éclairage de Köhler, qui serait perturbé par l'introduction du diviseur de Smith et est agencé dans le faisceau des rayons d'éclairage (3) devant le diviseur de Smith de façon que sa lentille collectrice (15) soit dirigée directement vers le diviseur de Smith et que l'organe de dispersion (16) soit tourné dans la direction de la source de lumière (6), et
(b) contient un second module d'éclairage incident (19) qui se compose d'une surface plane - diviseur neutre (20) se trouvant à 45° par rapport à l'axe optique (1) et peut être mis en position active par actionnement du support de modules.

2. Système d'éclairage incident de Köhler pour microscopes avec diaphragme d'ouverture et de fond clair stationnaire, caractérisé par un support de modules qui
(a) présente un premier module d'éclairage incident, qui contient un diviseur de Smith qui se compose d'une combinaison de miroir formée d'une surface plane partiellement transparente (2) et d'un miroir (4) totalement réfléchissant, en ce que la surface plane (2) du diviseur de Smith est agencée dans l'axe optique (1) du microscope à un angle ≠ 45° et dévie un faisceau de rayons d'éclairage faisant impact horizontalement sur le miroir (4) et réfléchi de là vers elle, coaxialement à l'axe, optique vertical (1), dans la direction de l'objet (5), et
(b) présente un second module d'éclairage incident (19) qui se compose d'une surface plane-diviseur neutre (20) se trouvant à 45° par rapport à l'axe optique (1) avec télésystème intégré, en ce que le télésystème qui se compose d'un organe collecteur (15) et d'un organe de dispersion (16) qui le suit, reproduit les conditions pour un éclairage de Kölher qui serait perturbé par l'insertion du diviseur de Smith et est agencé dans le faisceau des rayons d'éclairage (3) devant la surface de diviseur (20) de façon que son organe de dispersion (16) soit dirigé directement vers la surface du diviseur (20) et que l'organe collecteur (15) soit dans la direction de la source de lumière (6).

3. Système d'éclairage incident selon l'une des revendications 1 et 2, caractérisé an ce que les deux modules (18,19) sont maintenus échangeables sur un support de modules et peuvent être mis an position active au moyen de ce support.

4. Système d'éclairage incident selon l'une des revendications 1 et 3, caractérisé en ce que le support est configuré comme un coulisseau linéaire.

5. Système d'éclairage selon l'une des revendications 1 et 3, caractérisé an ce que le support est configuré comme un révolver.

6. Système d'éclairage incident selon l'une des revendications précédentes, caractérisé en ce que des moyens pour basculer le miroir de réflexion (4) du diviseur de Smith sont prévus.

7. Système d'éclaire incident selon au moins l'une des revendications 1 à 6, caractérisé an ce qu'à la place du diviseur de Smith se composant du miroir de réflexion (4) et de la surface plane partiellement transparente (2), est prévu un pentaprisme (12) avec prisme à angle droit (13) mastiqué, la surface mastiquée étant formée an tant que surface partiellement transparente (11).

8. Système d'éclairage incident selon la revendication 1 et 7, caractérisé en ce que la lentille collectrice (15) est reliée au pentaprisme (12) en mode de construction monolithique.

9. Système d'éclairage incident selon au moins l'une des revendications précédentes, caractérisé an ce que le télésystème se compose d'un organe mastiqué - lentille qui se compose d'une lentille collectrice et. d'une de dispersion.

10. Système d'éclairage incident selon au moins l'une des revendications précédentes, caractérisé en ce que le télésystème se compose d'un ménisque en une pièce qui présente une surface de lentille collectrice et une de dispersion.
